Europäisches Patentamt

European Patent Office

Office européen des brevets

(11) Veröffentlichungsnummer: **0 395 892**

**A1**

(12) **EUROPÄISCHE PATENTANMELDUNG**

(21) Anmeldenummer: 90106282.8

(22) Anmeldetag: 02.04.90

(51) Int. Cl.⁵: **F16C 19/52, G01P 3/44**

(30) Priorität: 29.04.89 DE 3914289

(43) Veröffentlichungstag der Anmeldung:
07.11.90 Patentblatt 90/45

(84) Benannte Vertragsstaaten:
**DE ES FR GB IT**

(71) Anmelder: **INA Wälzlager Schaeffler KG**
**Industriestrasse 1-3 Postfach 1220**
**D-8522 Herzogenaurach(DE)**

(72) Erfinder: **Zernickel, Alexander, Dipl.-Ing.**
**Sternstrasse 3**
**D-8522 Herzogenaurach(DE)**
Erfinder: **Adler, Helmut, Dipl.-Ing.**
**Von-Erthal-Strasse 6**
**D-8522 Herzogenaurach(DE)**

(74) Vertreter: **Klug, Horst, Dipl.-Ing. (FH)**
**c/o INA Wälzlager Schaeffler KG Postfach 12**
**20**
**D-8522 Herzogenaurach(DE)**

(54) **Radialwälzlager.**

(57) Bei einem Radialwälzlager mit wenigstens einem dünnwandigen, insbesondere aus Blech gezogenen Laufring (5), zwischen dem und einer dazu konzentrischen Gegenlaufbahn Wälzkörper (7) abrollen, wird ein Impulsring dadurch gebildet, daß der dünnwandige Laufring (5) an einer Stirnseite in einen einstückig angeformten, radial gerichteten, mit über den Umfang verteilten Ausnehmungen (10) versehenen Flansch (11) übergeht.

Fig. 1

EP 0 395 892 A1

## Radialwälzlager

Die Erfindung betrifft ein Radialwälzlager mit einer Impulsaufnahmeeinrichtung zur Ermittlung der Lagerdrehzahl bzw. des -drehwinkels und/oder der Drehrichtung, welches Lager wenigstens einen Laufring aufweist, zwischen dem und einer dazu konzentrischen Gegenlaufbahn Wälzkörper abrollen, und der am einen Ende einen als radialer Blechflansch mit über den Umfang verteilten Ausnehmungen ausgebildeten Impulsring aufweist.

Derartige Wälzlager sind in unterschiedlichen Bauarten seit langer Zeit bekannt. Sie werden beispielsweise zur Lagerung der Lenksäulen in Kraftfahrzeugen verwendet, wobei sie dann in der Regel als Schrägkugellager ausgebildet sind.

In neuerer Zeit wurde vorgeschlagen, durch optische oder elektrische Sensoreinrichtungen den Winkelbetrag und die Richtung, in welche die Lenksäule gedreht wurde, zu ermitteln und an eine Steuereinrichtung weiterzugeben, die ihrerseits auf hydraulischem oder pneumatischem Wege zwischen den Rädern einerseits und dem Fahrzeugaufbau andererseits Gegenkräfte aufbaut, die einer Seitenneigung des Fahrzeugaufbaues bei Kurvenfahrt entgegenwirkt.

Es ist in letzter Zeit aus verschiedenen Gründen vorgeschlagen worden, an Wälzlagerbauteilen Impulsringe anzubringen, die mit Impulsfühlern zusammenwirken, um - z. B. für einen automatischen Blockierschutz der Fahrzeugräder - in jedem Fahrzustand festzustellen, ob und gegebenenfalls wie schnell sich die einzelnen Räder drehen. In diesem Zusammenhang wurde beispielsweise in dem Dokument DE-U-8 814 620 vorgeschlagen, einen aus Blech bestehenden Impulsring auf eine Fläche eines drehbaren Wälzlagerlaufringes aufzusetzen und durch herausgeformte Teilabschnitte formschlüssig zu befestigen. Bei der vorgeschlagenen Befestigung des Impulsringes besteht die Gefahr, daß dieser nicht exakt rechtwinklig zur Lagerachse befestigt wird, so daß er im Betrieb eine Taumelbewegung durchführt. Es besteht auch die weitere Gefahr, daß der Impulsring bei der Befestigung an einer oder mehreren Umfangsstellen geringfügig verformt wird, wodurch er in Betrieb eine "Flatterbewegung" ausführt. Derartige Abweichungen von der Norm sind für den angestrebten Zweck absolut unzulässig, weil es für eine exakte Ermittlung der Drehung und der Drehgeschwindigkeit darauf ankommt, daß der Impulsring stets einen genau und in engen Grenzen vorbestimmten axialen Abstand vom Impulsfühler einhält.

Aus dem Dokument GB-A-2 204 646 ist ein Radialwälzlager mit einer Impulsaufnahmeeinrichtung bekannt, bei dem an dem massiven Außenlaufring an einer Stirnseite ein radialer Flansch mit einer ringförmigen Nut ausgebildet sein kann. Als Impulsring wird hier ein besonderes Bauteil benötigt, welches in Form eines gezahnten Ringes in die Nut eingesetzt ist.

Das Dokument FR-A-2 217 998 zeigt ein Radialwälzlager mit zwei Reihen von Wälzkörpern, die sich in einer gemeinsamen radialen Ebene befinden. Dabei sind die Ausnehmungen des radialen Flanschs eines Laufringes für dessen Befestigung vorgesehen, während der radiale Flansch des Laufringes der Gegenlaufbahn, der sich in derselben Ebene befindet, wie der erstgenannte Flansch, am Umfang Kerben aufweist, die ihm eine gewisse Elastizität geben sollen. Dieses Lager weist jedoch keine Impulsaufnahmeeinrichtung auf.

Der Erfindung liegt die Aufgabe zugrunde, ein Wälzlager mit einem Impulsring bzw. mit einer kompletten Impulsaufnahmeeinrichtung zu versehen, ohne daß es zusätzlicher Bauteile bedarf und insbesondere, ohne daß die Gefahr besteht, daß der Impulsring beschädigt bzw. verformt wird.

Diese Aufgabe löst die Erfindung dadurch, daß der Laufring als dünnwandiges, insbesondere aus Blech gezogenes Bauteil ausgeführt ist, das an einer Stirnseite in einen einstückig angeformten radial gerichteten Flansch übergeht. Dieser mit Ausnehmungen versehene Flansch bildet den Impulsring. Dadurch, daß er einstückig mit dem Wälzlagerlaufring hergestellt wird, und damit kein zusätzlicher Arbeitsgang für seine Befestigung erforderlich ist, entfällt die Gefahr, bei einem solchen Arbeitsgang beschädigt oder verformt zu werden. Es kann dagegen bei der einstückigen Herstellung gewährleistet werden, daß der den Impulsring bildende Flansch nicht nur exakt plan ist, sondern auch, daß er exakt parallel zur der Wälzkörperlaufbahn angeordnet ist, wodurch eine Taumelbewegung in Betrieb ausgeschlossen ist.

In Weiterbildung der Erfindung kann darüber hinaus die Gegenlaufbahn auf einem ebenfalls dünnwandigen, insbesondere aus Blech gezogenen Laufring angeordnet sein, der an einer Stirnseite ebenfalls in einen einstückig angeformten, radial gerichteten Flansch übergeht, der in geringem Abstand parallel zu dem Flansch des ersten dünnwandigen Laufringes verläuft und der an wenigstens einer Umfangsstelle eine Einrichtung zur Befestigung eines Impulsfühlers aufweist. Auf diese Weise ist es möglich, das Wälzlager selbst, ohne daß zusätzliche Bauteile erforderlich sind, mit einer kompletten Impulsaufnahmeeinrichtung zu versehen. Der Kunde, der ein solches Wälzlager angeliefert bekommt, hat nur noch den Impulsfühler an der dafür vorgesehenen Einrichtung zu befestigen, ohne daß sonstige, insbesondere die Meßgenauigkeit beeinträchtigende Arbeitsgänge durchgeführt werden müßten.

In den Zeichnungen sind zwei Ausführungsbeispiele der Erfindung jeweils im Längsschnitt dargestellt.

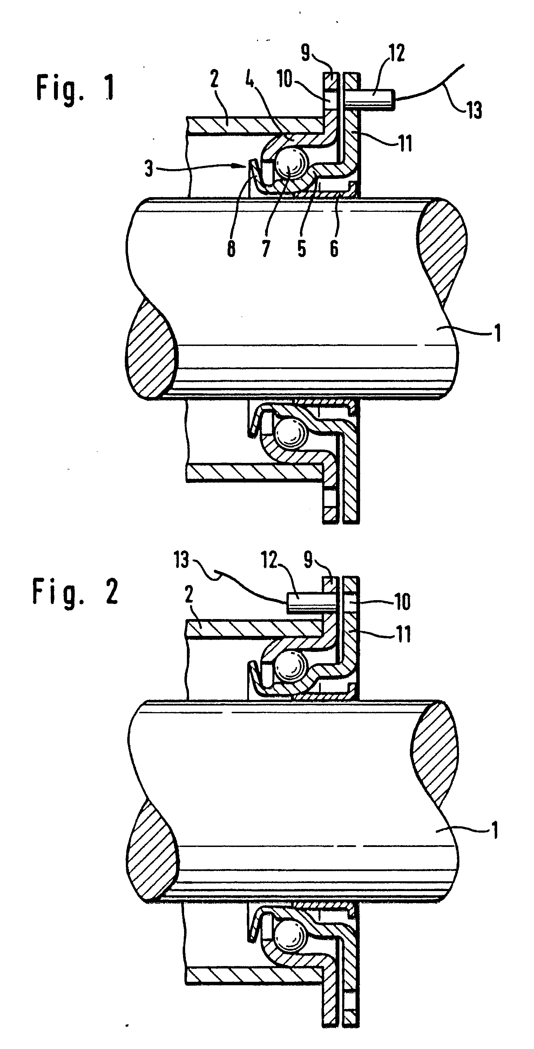

Figur 1 läßt die Lenkwelle 1 erkennen, die in dem Lenkrohr 2 mittels eines Radialwälzlagers 3 gelagert ist. Dieses Radialwälzlager besteht aus dem äußeren Laufring 4, der in das Lenkrohr 2 eingepreßt ist und dem inneren Laufring 5, der unter Zwischenschaltung eines Toleranzringes 6 auf der Lenkwelle 1 befestigt ist. Zwischen den beiden Laufringen rollen Kugeln 7 in entsprechend geformten Laufbahnen ab. An den inneren Laufring 5 ist am einen Ende ein Halteflansch 8 angeformt, der den äußeren Laufring 4 formschlüssig hintergreift und damit verhindert, daß die beiden Laufringe im nicht eingebauten Zustand von einander getrennt werden.

An der entgegengesetzten Seite ist der äußere Laufring 4 mit einem radial nach außen gerichteten Flansch 9 versehen, welcher über den Umfang verteilte Ausnehmungen 10 aufweist. An derselben Seite ist der innere Laufring 5 ebenfalls mit einem Flansch 11 versehen, der sich parallel und im geringen Abstand zu dem Flansch 9 erstreckt. Er weist an einer Umfangsstelle einen Durchbruch auf, in welchem ein Impulsfühler 12 befestigt ist. Dieser Impulsfühler 12 gibt über eine elektrische Leitung 13 die ermittelten Impulse an eine Steuereinrichtung weiter.

Die in Figur 2 dargestellte Ausführung der Erfindung unterscheidet sich von der nach Figur 1 lediglich dadurch, daß hier der Flansch 11 des inneren Laufringes 5 die Ausnehmungen 10 aufweist, und damit als Impulsring wirkt, während der Flansch 9 des äußeren Laufringes 4 den Impulsfühler 12 trägt.

**Ansprüche**

1. Radialwälzlager mit einer Impulsaufnahmeeinrichtung zur Ermittlung der Lagerdrehzahl bzw. des -drehwinkels und/oder der Drehrichtung, welches Lager wenigstens einen Laufring (4, 5) aufweist, zwischen dem und einer dazu konzentrischen Gegenlaufbahn Wälzkörper (7) abrollen, und der am einen Ende einen als radialer Blechflansch (9, 11) mit über den Umfang verteilten Ausnehmungen (10) ausgebildeten Impulsring aufweist, **dadurch gekennzeichnet**, daß der Laufring (4, 5) als dünnwandiges, insbesondere aus Blech gezogenes Bauteil ausgeführt ist, das an einer Stirnseite in einen einstückig angeformten radial gerichteten Flansch (9, 11) übergeht.

2. Radialwälzlager nach Anspruch 1, **dadurch gekennzeichnet**, daß die Gegenlaufbahn auf einem ebenfalls dünnwandigen, insbesondere aus Blech gezogenen Laufring (5, 4) angeordnet ist, der an einer Stirnseite in einen einstückig angeformten, radial gerichteten Flansch (11, 9) übergeht, der in geringem Abstand parallel zu dem Flansch (9, 11) des ersten dünnwandigen Laufringes (4, 5) verläuft, und der an wenigstens einer Umfangsstelle eine Einrichtung zur Befestigung eines Impulsfühlers (12) aufweist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | GB-A-2 204 646 (SKF) <br> * Seite 7, Zeilen 19-24; Seite 9, Zeilen 1-6; Figur 2 * <br> --- | 1 | F 16 C 19/52 <br> G 01 P 3/44 |
| Y | DE-A-3 702 474 (VOLKSWAGEN) <br> * Insgesamt * <br> --- | 1 | |
| D,Y | FR-A-2 217 998 (S.N.R.) <br> * Figur 1 * <br> --- | 1 | |
| A | FR-A-2 570 143 (NIPPON SEIKO) <br> * Seite 3, Zeilen 15-17 * <br> --- | 1 | |
| A | FR-A-2 558 223 (S.N.R.) <br> * Anspruch 1 * <br> ----- | 2 | |

**RECHERCHIERTE SACHGEBIETE (Int. Cl.5)**

F 16 C
G 01 P
G 01 M
B 60 B
B 60 T
B 62 D

Der vorliegende Recherchenbericht wurde für alle Patentansprüche erstellt

| Recherchenort | Abschlußdatum der Recherche | Prüfer |
|---|---|---|
| DEN HAAG | 05-07-1990 | ORTHLIEB CH.E. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...................................................
& : Mitglied der gleichen Patentfamilie, übereinstimmendes Dokument